# FASCICULE DE BREVET EUROPEEN

(11) **EP 0 507 644 B1**
(45) Date de publication et mention de la délivrance du brevet: **27.09.1995**
(21) Numéro de dépôt: 92400734.7
(22) Date de dépôt: 19.03.1992
(51) Int. Cl.: B60N 2/44, A47C 7/46

(54) **Dispositif de réglage pour élément de soutien à matelassure**
Verstellvorrichtung für ein Stützelement mit Polsterung
Adjusting device for a supporting element with padding

(30) Priorité: 03.04.1991 FR 9104379
(43) Date de publication de la demande: 07.10.1992
(73) Titulaire: AUTOMOBILES PEUGEOT, 75116 Paris (FR); AUTOMOBILES CITROEN, 92200 Neuilly-sur-Seine (FR)
(72) Inventeur: Outters, Jean, F-92310 Sevres (FR)
(74) Mandataire: Robert, Jean-François

(56) Documents cités:
- EP-A- 0 026 668
- DE-A- 1 505 314
- GB-A- 2 210 258
- US-A- 2 750 995
- US-A- 4 339 150

## Description

La présente invention concerne des éléments de soutien, tels que les dossiers ou assises d'un siège de véhicule, qui comprennent une matelassure montée sur une armature rigide.

Pour permettre un réglage du soutien, on peut modifier la tension de la nappe de soutien en agissant sur un ressort; mais un tel dispositif est peu sensible et dur à la commande. On peut également cambrer la nappe de soutien, mais l'effort à exercer pour le réglage est important.

La présente invention a pour objet un dispositif de réglage pour un élément de soutien du type ci-dessus qui évite ces inconvénients.

Plus précisément, le dispositif objet de l'invention est du type comprenant: une matelassure montée sur les bords d'une armature rigide; une première plaque montée sur l'armature rigide; une deuxième plaque parallèle à la première et propre à venir prendre appui sur la matelassure entre les bords de l'armature; au moins deux entretoises articulées aux plaques autour d'axes parallèles, et des moyens pour varier l'écart entre les plaques et donc le soutien de la matelassure.

Le document US-A-4339150 décrit un dispositif de ce type.

Le document DE-A-1505314 décrit un dispositif permettant d'avancer et lever simultanément le siège d'un véhicule automobile par l'intermédiaire d'un système à parallélogramme.

Selon la principale caractéristique du dispositif objet de l'invention, les entretoises sont parallèles entre elles et forment avec les deux plaques un parallélogramme déformable et la variation de l'écart entre les plaques est réalisée par des moyens montés sur l'armature et permettant d'exercer une traction sur la deuxième plaque pour la déplacer dans une direction sensiblement parallèle à son plan et perpendiculaire aux axes d'articulation.

D'autres caractéristiques de ce dispositif sont précisées dans les revendications 2 à 9.

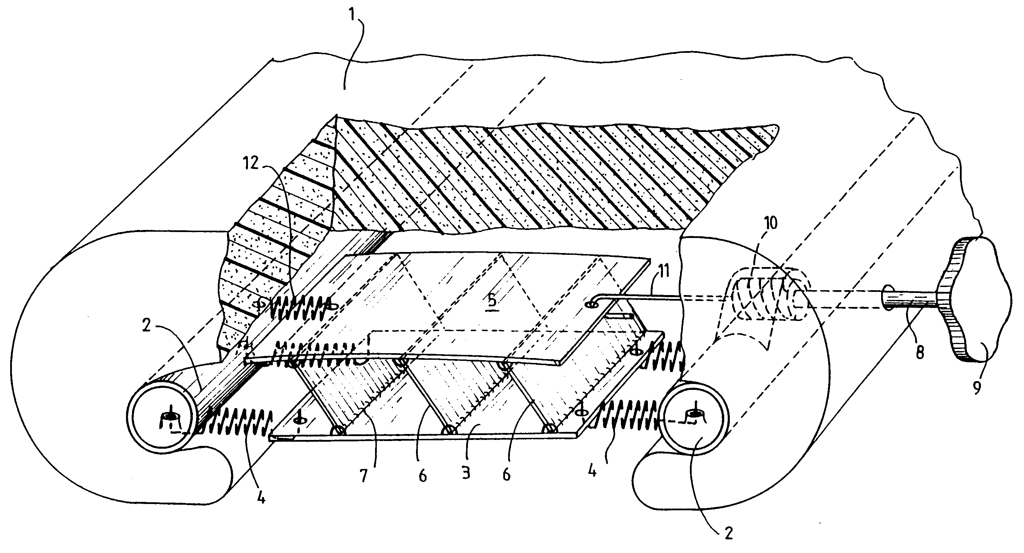

On a décrit ci-après, à titre d'exemple non limitatif, un mode de réalisation d'un élément de soutien muni du dispositif de réglage selon l'invention avec référence à la figure unique du dessin annexé qui en est une vue en perspective avec arrachement.

Au dessin, on voit le dossier ou l'assise d'un siège comprenant une matelassure 1 montée sur une armature rigide 2 qui est ici tubulaire.

Sous la matelassure 1 est placé un dispositif de réglage comprenant une première plaque semi-rigide 3 reliée à l'armature 2 par des tiges rigides ou des ressorts 4, une seconde plaque semi-rigide 5, parallèle à la plaque 3 et propre à prendre appui sur la matelassure 1, et une série d'entretoises rigides 6 qui sont articulées sur les plaques 3 et 5 par des charnières 7 parallèles entre elles. Les plaques 3 et 5 sont, par exemple, en polypropylène de faible épaisseur. Les entretoises 6 sont par exemple en acier, en polyamide ou en polyacétal; elles peuvent être en forme de rectangle, de trapèze ou de parallélogramme, les deux côtés munis de charnières étant parallèles l'un à l'autre; elles peuvent être pleines ou évidées en leur centre.

Une vis de réglage 8 portant une poignée de manoeuvre 9 est engagée dans un trou taraudé prévu dans une pièce 10 portée par l'un des bords de l'armature 2; cette vis est attelée à un crochet 11, de manière à pouvoir tourner par rapport à lui, qui est accroché au bord adjacent de la plaque 5. L'autre bord de cette plaque est relié par un ressort de rappel 12 à l'autre bord de l'armature 2.

Quand on manoeuvre la poignée 9, la plaque 5 se déplace transversalement, dans un sens ou dans l'autre suivant le sens de rotation de la poignée. Il en résulte, par effet de parallélogramme déformable, une variation de l'écart entre les plaques 3 et 5, donc de l'effet de soutien de la matelassure 1.

Il va de soi que la présente invention ne doit pas être considérée comme limitée au mode de réalisation décrit et représenté, mais en couvre, au contraire, toutes les variantes.En particulier, on peut remplacer les moyens de déplacement de la deuxième plaque décrits ci-dessus par tout système équivalent permettant d'exercer une traction sur cette plaque.

## Revendications

1. Dispositif de réglage pour un élément de soutien, tel que le dossier ou l'assise d'un siège de véhicule, comprenant: une matelassure (1) montée sur les bords d'une armature rigide (2); une première plaque (3) montée sur l'armature rigide (2); une deuxième plaque (5) parallèle à la première et propre à venir prendre appui sur la matelassure (1) entre les bords de l'armature (2); au moins deux entretoises (6) articulées aux deux plaques (3 et 5) autour d'axes parallèles, et des moyens (8 à 11) pour varier l'écart entre les plaques et donc le soutien de la matelassure, caractérisé en ce que les entretoises (6) sont parallèles entre elles et forment avec les deux plaques (3,5) un parallélogramme déformable, et en ce que la variation de l'écart entre les plaques est réalisée par des moyens montés sur l'armature et permettant d'exercer une traction sur la deuxième plaque (5) pour la déplacer dans une direction sensiblement parallèle à son plan et perpendiculaire aux axes d'articulation.

2. Dispositif selon la revendication 1, caractérisé en ce que les moyens pour déplacer la deuxième plaque (5) comprennent une tige (8) présentant un filetage passant dans un trou taraudé prévu dans une pièce (10) solidaire de l'armature rigide (2), l'une des extrémités de cette tige étant reliée à la deuxième plaque par un élément tel qu'un crochet (11) et son autre extrémité étant équipée d'une poignée de manoeuvre (9).

3. Dispositif selon la revendication 1 ou 2, caractérisé en ce que la première plaque (3) est montée sur l'armature rigide (2) par l'intermédiaire de moyens élastiques (4).

4. Dispositif selon la revendication 1 ou 2, caractérisé en ce que la première plaque (3) est montée sur l'armature rigide (2) par l'intermédiaire d'éléments rigides tels que des tiges.

5. Dispositif selon l'une quelconque des revendications 1 à 4, caractérisé par des moyens de rappel (12) interposés entre l'armature (2) et la deuxième plaque (5).

6. Dispositif selon l'une quelconque des revendications précédentes, caractérisé en ce que les plaques (3 et 5) sont en un matériau semi-rigide.

7. Dispositif selon la revendication 6, caractérisé en ce que les plaques (3 et 5) sont en une matière plastique semi-rigide telle que le polypropylène de faible épaisseur.

8. Dispositif selon l'une quelconque des revendications précédentes, caractérisé en ce que les entretoises (6) sont en un matériau rigide.

9. Dispositif selon la revendication 8, caractérisé en ce que les entretoises (6) sont en acier ou en une résine polyamide ou polyacétal.

## Claims

1. A device for adjusting a support element, such as the back or seat pad of a vehicle seat, comprising: padding (1) mounted over the edges of a rigid frame (2); a first plate (3) mounted on the rigid frame (2); a second plate (5) parallel to the first one and suitable for resting on the padding (1) between the edges of the frame (2); at least two struts (6) hinged to the two plates (3 and 5) around parallel axes, and means (8 to 11) for varying the distance between the plates and therefore the support for the padding, characterised in that the struts (6) are parallel to each other and form, together with the two plates (3, 5), a deformable parallelogram, and in that the distance between the plates is varied by means mounted on the frame and making it possible to exert traction on the second plate (5) in order to displace it in a direction substantially parallel to its plane and perpendicular to the axes of hinging.

2. A device according to Claim 1, characterised in that the means for displacing the second plate (5) comprise a rod (8) having threading passing through a threaded hole provided in a part (10) integral with the rigid frame (2), one of the ends of this rod being connected to the second plate by an element such as a hook (11) and its other end being fitted with an operating handle (9).

3. A device according to Claim 1 or 2, characterised in that the first plate (3) is mounted on the rigid frame (2) via resilient means (4).

4. A device according to Claim 1 or 2, characterised in that the first plate (3) is mounted on the rigid frame (2) via rigid elements such as rods.

5. A device according to any one of Claims 1 to 4, characterised by return means (12) interposed between the frame (2) and the second plate (5).

6. A device according to any one of the preceding claims, characterised in that the plates (3 and 5) are made of a semi-rigid material.

7. A device according to Claim 6, characterised in that the plates (3 and 5) are made of a semi-rigid plastic material such as low-thickness polypropylene.

8. A device according to any one of the preceding claims, characterised in that the struts (6) are made of a rigid material.

9. A device according to Claim 8, characterised in that the struts (6) are made of steel or of a polyamide or polyacetal resin.

## Patentansprüche

1. Einstellvorrichtung für ein Stützelement, wie beispielsweise die Rücklehne oder die Sitzfläche eines Fahrzeugsitzes, mit: einer Polsterung (1), die an den Rändern einer steifen Armatur (2) angebracht ist; einer ersten Platte (3), die auf der steifen Armatur (2) angebracht ist; einer zweiten Platte (5), die parallel zur ersten Platte und dazu geeignet ist, sich auf der Polsterung (1) zwischen den Rändern der Armatur (2) abzustützen; wenigstens zwei Zwischenwänden (6), die bezüglich der beiden Platten (3 und 5) um parallele Achsen gelenkig angeordnet sind, und Einrichtungen (8 bis 11), zum Verändern des Abstandes zwischen den Platten und somit des Stützens der Polsterung, dadurch gekennzeichnet, daß die Zwischenwände (6) untereinander parallel sind und mit den beiden Platten (3, 5) ein verformbares Parallelogramm bilden, und daß die Veränderung des Abstands zwischen den Platten durch Mittel erzeugt wird, die an der Armatur angebracht sind und ermöglichen, einen Zug auf die zweite Platte (5) auszuüben, um sie zu verschieben, in eine Richtung im wesentlichen parallel zu ihrer Ebene und senkrecht zur Gelenkachse.

2. Vorrichtung nach Anspruch 1, dadurch gekennzeichnet, daß die Einrichtungen zum Verschieben oder Bewegen der zweiten Platte (5) eine Stange (8) aufweisen, die ein Gewinde aufweist, das sich in einem Gewindeloch erstreckt, das in einem Teil (10) vorgesehen ist, das mit der steifen Armatur (2) verbunden ist, wobei ein Ende dieser Stange mit der zweiten Platte durch ein Element, wie beispielsweise einen Haken (11) verbunden ist, und sein anderes Ende mit einem Betätigungshandgriff (9) versehen ist.

3. Vorrichtung nach Anspruch 1 oder 2, dadurch gekennzeichnet, daß die erste Platte (3) auf der steifen Armatur (2) mittels elastischer Mittel (4) angeordnet ist.

4. Vorrichtung nach Anspruch 1 oder 2, dadurch gekennzeichnet, daß die erste Platte (3) auf der steifen Armatur (2) mittels steifer Elemente, wie beispielsweise Stangen montiert ist.

5. Vorrichtung nach einem der Ansprüche 1 bis 4, dadurch gekennzeichnet, daß Rückhalteeinrichtungen (12) vorgesehen sind, die zwischen der Armatur (2) und der zweiten Platte (5) gesetzt sind.

6. Vorrichtung nach einem der vorhergehenden Ansprüche, dadurch gekennzeichnet, daß diese Platten (3 und 5) aus einem halbstarren Material gebildet sind.

7. Vorrichtung nach Anspruch 6, dadurch gekennzeichnet, daß die Platten (3 und 5) aus einem halbstarren Kunststoffmaterial, wie beispielsweise Polypropylen mit geringer Dicke ausgebildet sind.

8. Vorrichtung nach einem der vorhergehenden Ansprüche, dadurch gekennzeichnet, daß die Zwischenwände (6) aus einem starren Material gebildet sind.

9. Vorrichtung nach Anspruch 8, dadurch gekennzeichnet, daß die Trennwände (6) aus Stahl oder aus einem Polyamid oder Polyacetal-Harz gebildet sind.
